Europäisches Patentamt

European Patent Office

Office européen des brevets

(19)
(11) Veröffentlichungsnummer: **0 250 708 B1**

# EUROPÄISCHE PATENTSCHRIFT

(12)

(45) Veröffentlichungstag der Patentschrift: **30.09.92**

(21) Anmeldenummer: **87102465.9**

(22) Anmeldetag: **21.02.87**

(51) Int. Cl.⁵: **B29D  30/06**

---

(54) **Reifenvulkanisierform.**

---

(30) Priorität: **23.06.86 DE 8616697 U**

(43) Veröffentlichungstag der Anmeldung:
**07.01.88 Patentblatt  88/01**

(45) Bekanntmachung des Hinweises auf die
Patenterteilung:
**30.09.92 Patentblatt  92/40**

(84) Benannte Vertragsstaaten:
**AT BE DE ES FR GB IT LU**

(56) Entgegenhaltungen:
**DE-U- 7 624 227**
**US-A- 3 682 576**

(73) Patentinhaber: **A-Z Formen und Maschinenbau GmbH
Frohschammerstrasse 14
W-8000 München 40(DE)**

(72) Erfinder: **Hilke, Rainer
Josef Fischhaberstrasse 8a
W-8130 Starnberg(DE)**
Erfinder: **Schmaderer, Gerhard
Bäumlstrasse 5
W-8490 Cham(DE)**

(74) Vertreter: **Patentanwälte Dipl.-Ing. R. Splanemann Dr. B. Reitzner Dipl.-Ing. K. Baronetzky
Tal 13
W-8000 München 2(DE)**

## Beschreibung

Die Erfindung betrifft eine Reifenvulkanisierform gemäß dem Oberbegriff des Anspruchs 1.

Eine derartige Reifenvulkanisierform ist aus dem DE-GM 76 24 227 bekannt. Bei einer derartigen Reifenvulkanisierform ist der Laufflächenformring in Segmente unterteilt, die an Gleitschuhen geführt werden. Die Gleitschuhe sind gleitbeweglich an einer konischen Innenfläche eines Schließrings angebracht, so daß die Segmente sich beim Absenken des Schließrings radial nach innen bewegen.

Die dabei übertragenen Kräfte sind vergleichsweise groß. Um dem dementsprechend großen Verschleiß zu begegnen, sind gemäß der DE-GM 76 24 227 die zur Kraftübertragung verwendeten Teile austauschbar. Die Kraftübertragung erfolgt über spezielle Gleitschienen, die an dem dem konischen Schließring zugewandten Teil der Gleitschuhe austauschbar angebracht sind, an ihrer dem konischen Schließring zugewandten Fläche als Tragkörper ausgebildet sind und dort eine Gleitmaterialschicht aufweisen.

Es hat sich jedoch gezeigt, daß der Austausch der Gleitschienen, der bei jeder Abnützung der Gleitmaterialschicht erforderlich ist, mit relativ hohem Aufwand verbunden ist. Ferner verschlechtert sich bei den bekannten Reifenvulkanisierformen mit zunehmender Abnutzung der dortigen Gleitmaterialschicht der Toleranzbereich, so daß ggf. ein Austausch der Gleitschienen vorgenommen werden muß, bevor die Gleitmaterialschicht auf den Gleitschienen völlig abgerieben ist.

Daher ist es Aufgabe der Erfindung, eine Reifenvulkanisierform gemäß dem Oberbegriff des Anspruchs 1 zu schaffen, bei welcher über einen langen Zeitraum hinweg ein Betrieb ohne merkliche Vergrößerung der Toleranzen möglich ist.

Diese Aufgabe wird erfindungsgemäß durch Anspruch 1 gelöst. Vorteilhafte Weiterbildungen ergeben sich aus den Unteransprüchen.

Dadurch, daß das erfindungsgemäße Gleitmittelblech als selbstständiges Teil ausgebildet ist, ergibt sich zunächst der Vorteil, daß nicht wie bei einer Beschichtung ein Austausch des das Gleitmittelblech tragenden Teils erfolgen muß, sondern daß lediglich das Gleitmittelblech selbst ausgetauscht werden muß. Besonders vorteilhaft ist es, das Gleitmittelblech nicht an einem Gleitschuh mit einer relativ kleinen für die Kraftübertragung zur Verfügung stehenden Fläche, sondern an der konischen Innenfläche des Schließrings vorzusehen, denn dadurch steht eine vergleichsweise große Fläche zur Verfügung, was zu einem relativ geringen Flächendruck führt.

Durch den geringen Flächendruck wiederum kann die Abnutzung in sehr engen Grenzen gehalten werden, was der Führungsgenauigkeit der Schließform zuträglich ist.

Ferner läßt sich das erfindungsgemäße Gleitmittelblech sehr einfach befestigen und leicht austauschen.

Mit der besonders bevorzugten Ausführungsform gemäß Anspruch 6 ist es möglich, nunmehr auch die Gegenführungsflächen, also die Führungsflächen, die der konischen Innenfläche des Schließrings zugewandt sind und die die Segmente beim Öffnen des Schließrings sehr verschleißarm an dem Schließring gleiten lassen, mit Gleitmittelblech auszurüsten.

Durch die erfindungsgemäße Ausstattung der Verschleißflächen mit dem Gleitmittelblech kann vermieden werden, daß diese Flächen maschinell abgedreht werden müssen und danach wieder eine neue Beschichtung aufgebracht werden muß, wenn Verschleiß aufgetreten ist. Es ist lediglich erforderlich, die Gleitmittelbleche abzuschrauben und durch neue zu ersetzen.

Da vergleichsweise dünne Gleitmittelbleche verwendet werden, können auch bei größtmöglichem Abrieb die geforderten Toleranzen ohne weiteres eingehalten werden.

Weitere Einzelheiten, Merkmale und Vorteile der Erfindung ergeben sich aus der nachfolgenden Beschreibung eines Ausführungsbeispiels anhand der Zeichnung.

Es zeigen:

Fig. 1    eine Ansicht von zwei unmittelbar nebeneinander auf der konischen Innenfläche eines Schließrings montierten Gleitmittelblechen;

Fig. 2    einen Schnitt in radialer Richtung durch den erfindungsgemäßen Schließring entlang der Linie B-B in Fig. 1;

Fig. 3    einen Schnitt in radialer Richtung durch den erfindungsgemäßen Schließring entlang der Linie A-A in Fig. 1;

Fig. 4    einen Schnitt durch einen Teil des Schließrings und einen Teil eines erfindungsgemäßen Segments entlang der Linie D-D aus Fig. 1 und zugleich entlang der Linie C-C in Fig. 2;

Fig. 5    das Detail X gemäß Fig. 3 in vergrößerter Darstellung ohne Gleitmittelblech;

Fig. 6    das Gleitmittelblech im Schnitt mit einer Durchgangsbohrung; und

Fig. 7    das Detail X gemäß Fig. 3 in vergrößerter Darstellung.

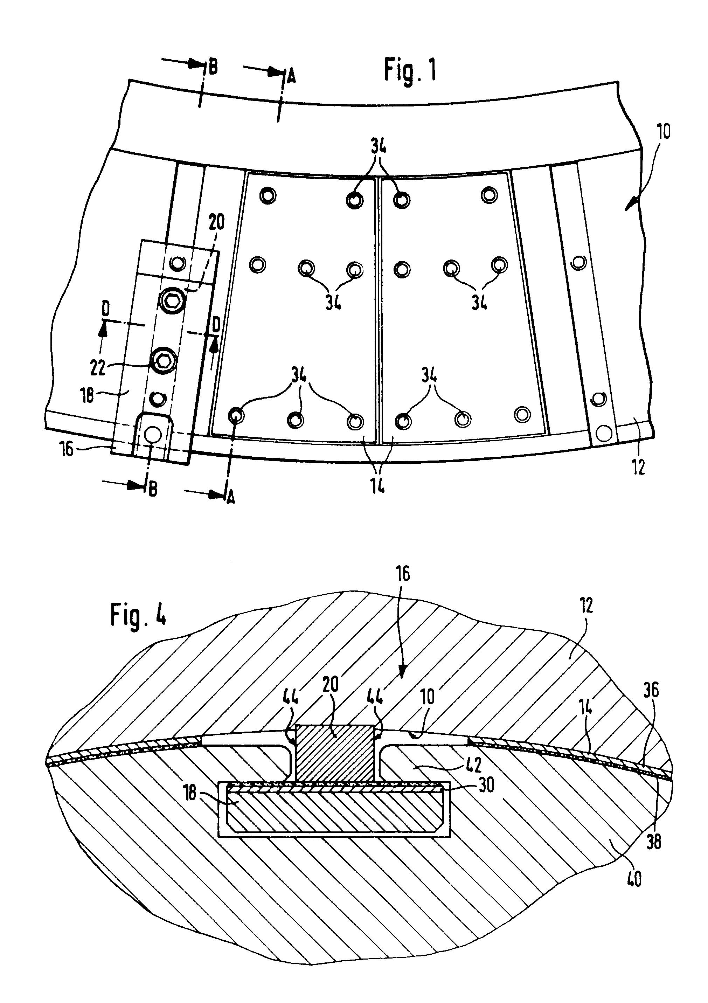

Auf der konischen Innenfläche 10 eines Schließrings 12 sind insgesamt 16 um den Umfang verteilte Gleitmittelbleche 14 aufgeschraubt. Zwei Gleitmittelbleche 14 stoßen aneinander. Beidseitig neben je zwei Gleitmittelblechen 14 sind Führungsvorrichtungen 16 innen an dem Schließring 12 befestigt. Eine Führungsvorrichtung 16 weist einen Querschenkel 18 auf, der von einem in Fig. 1 von dem Querschenkel 18 verdeckten Abstandshalter 20 im Abstand von der konischen Innenfläche 10 mittels Schraubverbindungen 22 gehalten ist.

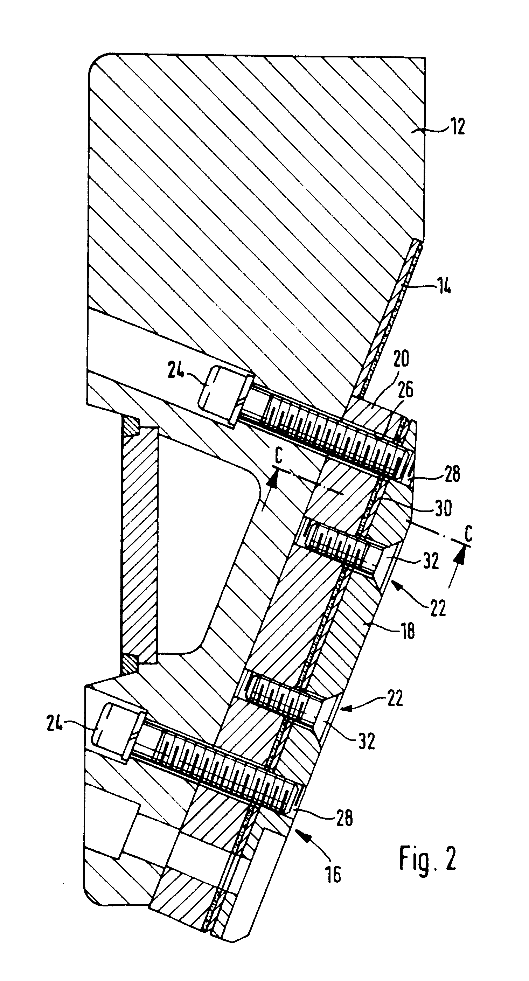

Die Ausbildung der Schraubverbindungen 22 ist in Fig. 2 im einzelnen dargestellt. Hier wie auch in den weiteren Figuren bezeichnen gleiche Bezugszeichen gleiche Teile. Zwei Schrauben 24 erstrecken sich von außen durch einen Teil des Schließrings 12 und durch je eine Bohrung 26 in dem Abstandshalter 20 und greifen in Gewinde 28 in den Querschenkel 18 der Führungsvorrichtung 16 ein. Auf der ganzen dem Abstandshalter 20 zugewandten Fläche des Querschenkels 18 ist Gleitmittelblech 30 vorgesehen. Ferner ist außerhalb des Bereichs der Führungseinrichtung 16 das bereits in Fig. 1 ersichtliche Gleitmittelblech 14 angebracht.

Zwei zusätzliche Schrauben 32 sind ferner vorgesehen, um das Gleitmittelblech 30 sicher zwischen dem Abstandshalter 20 und dem Querschenkel 18 zu fixieren. Hierzu erstrecken sich die Schrauben durch Durchtrittsausnehmungen in dem Querschenkel 18 und in dem Gleitmittelblech 30 hindurch und greifen in ein Gewinde in dem Abstandshalter 20 ein. Gemäß einer bevorzugten Ausführungsform sind die Schrauben 32 versenkt angeordnet.

Mit der verwendeten Mehrfachanordnung von Schrauben 24 und 32 kann die Führungsvorrichtung 16 von dem Schließring 12 einfach dadurch demontiert werden, daß die Schrauben 24, die von außen zu erreichen sind, gelöst werden. Die Führungseinrichtung läßt sich dann von unten entnehmen, ohne daß jedoch in ihre Einzelteile zu zerfallen.

Wenn nun das Gleitmittelblech 30 ersetzt werden soll, kann dies durch Lösen der Schrauben 32 geschehen.

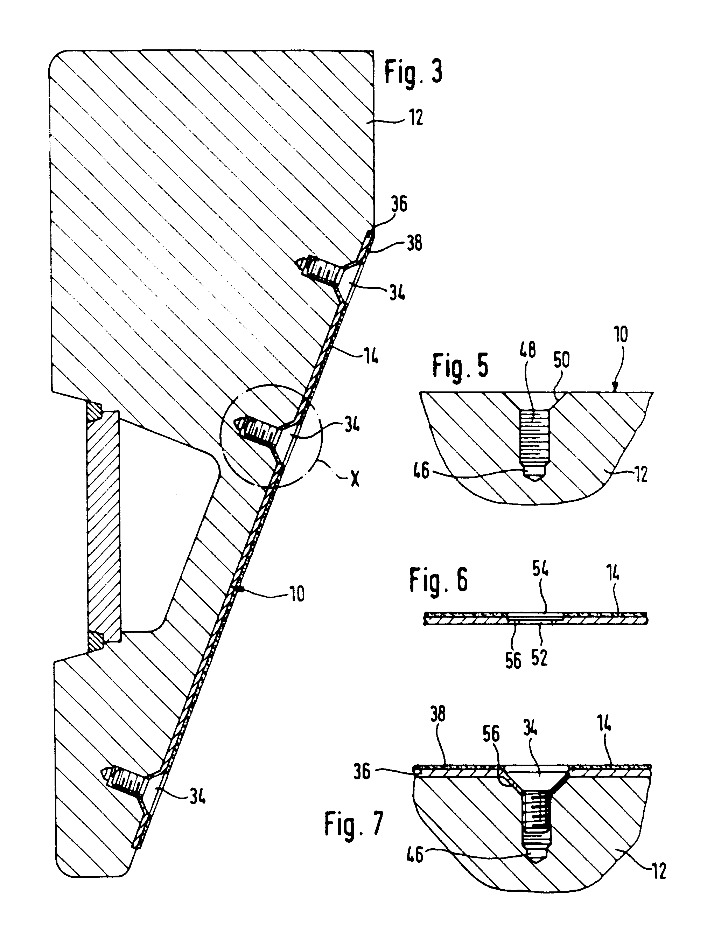

Die Art der Befestigung des Gleitmittelblechs 14 in dem Schließring 12 ist in Fig. 3 dargestellt. Senkkopfschrauben 34 erstrecken sich durch eine Ausnehmung in dem an dieser Stelle entsprechend der Kopfform der Senkkopfschraube 34 verformten Gleitmittelblech 14 hindurch und greifen in Innengewinde in dem Schließring 12 ein. Gemäß dem in Fig. 3 dargestellten Ausführungsbeispiel ist das Gleitmittelblech 14 aus zwei Schichten aufgebaut, nämlich aus einer Tragschicht 36 und einer Schmierschicht 38. Die Tragschicht 36 besteht aus Stahlblech, während die Schmierschicht 38 aus einer Bronzelegierung mit Graphiteinlagerungen besteht. Mit diesem Material läßt sich aufgrund der stetigen, aber langsamen Graphitabgabe ein gleichbleibend niedriger Reibungskoeffizient erzielen, ohne daß die Stärke des Gleitmittelblechs 14 merklich abnähme.

Wie Fig. 3 zu entnehmen ist, sind die Schrauben 34 ungleichmäßig über die konische Innenfläche 10 des Schließrings 12 verteilt. Diese auch in Fig. 1 veranschaulichte Verteilung der Schrauben soll gewährleisten, daß das Gleitmittelblech 14 überall sicher und gleichmäßig an der konischen Innenfläche 10 anliegt. Ferner wird mit dieser Anordnung vermieden, daß sich das Gleitmittelblech, das ja relativ dünn gehalten ist (etwa 3 mm), verziehen kann.

In Fig. 4 ist das Zusammenwirken eines Segments 40 mit der Führungsvorrichtung 16 dargestellt. Bei dieser besonders bevorzugten erfindungsgemäßen Ausführungsform ist der eigentliche Gleitschuh 42 des Segments 40 einstückig mit dem Segment 40 ausgebildet. Der Gleitschuh 42 umgreift die Führungsvorrichtung 16 beidseitig und stützt so das Segment 40 über das auf dem Querschenkel 18 angebrachte Gleitmittelblech 30 an der Führungsvorrichtung 16 ab. In Gegenrichtung wird das Segment 40 über das auf der konischen Innenfläche 10 aufgebrachte Gleitmittelblech 14 an dem Schließring 12 abgestützt.

Das Gleitmittelblech 14 überträgt also die im wesentlichen beim Schließen des Schließrings 12 auftretenden Kräfte, während das Gleitmittelblech 30 die beim Öffnen des Schließrings 12 auftretenden Kräfte überträgt. Da die beim Schließen auftretenden Kräfte erheblich größer sind und da das Gleitmittelblech 14 eine erheblich größere Fläche als das Gleitmittelblech 30 aufweist, kann von einer in etwa gleichen Flächenpressung und damit von einer etwa gleichen Abnutzung ausgegangen werden. Demgegenüber sind die von der Führungsvorrichtung 16 zu übertragenden seitlichen Kräfte vernachlässigbar, so daß es nicht erforderlich ist, etwa an den seitlichen Flächen 44 des Abstandshalters 20 zusätzliche Gleitmittelbleche anzubringen. Vielmehr ist es wünschenswert, hier ein gewisses Spiel vorzusehen, damit die Segmente 40 sich fugenlos um den nicht dargestellten Reifenformling schließen können.

In Fig. 5 ist die erforderliche Vorbearbeitung des Schließrings 12 zur Erstellung einer Schraubverbindung mittels der Senkkopfschrauben 34 dargestellt. Zunächst wird ein Sackloch 46 gebohrt, das dann später mit einem Innengewinde 48 versehen wird. Dann wird an dem Sackloch 46 eine Fase 50 beispielsweise mit einem Senkwinkel von 90° erzeugt, die etwas größer als der Schraubenkopf der zu verwendenden Senkkopfschraube 34 ist.

Für die Ausbildung der Schraubverbindung wird das Gleitmittelblech 14 in der in Fig. 6 dargestellten Weise vorbereitet. Nach der Erstellung einer Bohrung 52 wird das Gleitmittelblech 14 von der Seite der Schmierschicht 38 her mit einer konzentrisch zu der Bohrung ausgerichteten Ausnehmung 54 versehen, was beispielsweise durch Anfräsen geschehen kann. Bei einer Stärke des Gleitmittelblechs 14 von 3 mm werden beispielsweise 2 mm weggefräst.

Durch Einschrauben der Senkkopfschraube 34 verformt sich der die Bohrung 52 umgebende dünne Bereich 56 des Gleitmittelblechs 14 in der aus Fig. 7 ersichtlichen, im wesentlichen konischen Weise. Damit wird eine sichere, aber dennoch lösbare Arretierung des Gleitmittelblechs 14 an dem Schließring 12 erreicht, ohne daß die Gefahr bestände, daß die Oberfläche der Senkkopfschraube 34 bei fortschreitender Abnutzung des Gleitmittelblechs 14 mit der in Fig. 7 nicht dargestellten Gleitfläche eines Segments 40 in Berührung kommt.

Zusammenfassend ergibt sich also bei der Reifenvulkanisierform für Fahrzeugreifen mit den Segmenten 40, die an einem Schließring 12 über eine Führungsvorrichtung 16 geführt sind, durch das erfindungsgemäße, an dem Schließring 12 angeschraubte Gleitmittelblech 14 der Vorteil einer verbesserten Präzision, der bleibenden Maßhaltigkeit und einer Erleichterung der Wartung.

## Patentansprüche

1. Reifenvulkanisierform für Fahrzeugreifen, mit einem oberen und einem unteren Seitenwandformteil, mit einem mit einer konischen Innenfläche versehenen Schließring für einen Laufflächenformring, wobei an der konischen Innenfläche Führungsvorrichtungen vorgesehen sind, welche Gleitschuhe gleitbeweglich führen, mit Segmenten, die mit den Gleitschuhen starr verbunden sind und die den Laufflächenformring bilden, dadurch gekennzeichnet, daß die konische Innenfläche (10) an druckaufnehmenden Stellen mit Gleitmittelblech (14) beschichtet ist.

2. Reifenvulkanisierform nach Anspruch 1, dadurch gekennzeichnet, daß das Gleitmittelblech (14) dünn, insbesondere mit einer Stärke von 1 bis 5 mm, ausgebildet ist, und daß es lösbar an der konischen Innenfläche (10) befestigt ist.

3. Reifenvulkanisierform nach einem der vorhergehenden Ansprüche, dadurch gekennzeichnet, daß das Gleitmittelblech (14) aus einer kupferhaltigen Legierung besteht, in welcher Graphiteinlagerungen vorgesehen sind.

4. Reifenvulkanisierform nach einem der vorhergehenden Ansprüche, dadurch gekennzeichnet, daß die Führungsvorrichtungen (16) an der konischen Innenfläche (10) ein im Querschnitt im wesentlichen T-förmiges Profil aufweisen und lösbar an den konischen Innenflächen (10) montiert sind und daß die Gleitschuhe (42) einstückig an die Segmente angeformt sind.

5. Reifenvulkanisierform nach Anspruch 4, dadurch gekennzeichnet, daß die im wesentlichen T-förmigen Führungsvorrichtungen (16) an ihren der konischen Innenfläche (10) zugewandten Flächen mit Gleitmittelblech (30) beschichtet sind.

6. Reifenvulkanisierform nach Anspruch 5, dadurch gekennzeichnet, daß die T-förmigen Führungsvorrichtungen (16) einen Querschenkel (18) und einen von dem Querschenkel (18) trennbaren Abstandshalter (20) aufweisen und daß das an der der konischen Innenfläche (10) zugewandten Fläche des Querschenkels aufgebrachte Gleitmittelblech (30) sich einstückig über den Querschenkel (18) erstreckt.

7. Reifenvulkanisierform nach Anspruch 6, dadurch gekennzeichnet, daß das sich über den Querschenkel (18) erstreckende Gleitmittelblech (30) durch eine zwischen dem Abstandshalter (20) und dem Querschenkel (18) vorgesehene Verschraubung (Schrauben 32) festgehalten ist.

8. Reifenvulkanisierform nach einem der vorhergehenden Ansprüche, dadurch gekennzeichnet, daß die Teile der konischen Innenfläche (10) des Schließrings (12), die von den Führungsvorrichtungen (16) abgedeckt sind, von dem Gleitmittelblech (14) freigehalten sind.

9. Reifenvulkanisierform nach einem der vorhergehenden Ansprüche, dadurch gekennzeichnet, daß das Gleitmittelblech (14) auf die konische Innenfläche (10) geschraubt ist, wobei die Schrauben versenkt ausgebildet sind.

10. Reifenvulkanisierform nach einem der vorhergehenden Ansprüche, dadurch gekennzeichnet, daß das Gleitmittel blech (14,30) zweischichtig ausgebildet ist, wobei eine Tragschicht (36) aus einem stabilen und zähelastischen Material, insbesondere aus Stahlblech, vorgesehen ist, welche eine aus einem weicheren Material bestehende Schmierschicht (38) trägt.

11. Reifenvulkanisierform nach Anspruch 10, dadurch gekennzeichnet, daß an den Senkstellen der Verschraubungen des Gleitmittelblechs (14) die Schmierschicht (38) entfernt ist und daß die Verschraubung das Gleitmittelblech (14) über konisch verformte Teile der Tragschicht (36) zwischen dem Senkkopf der Verschraubung und einer konischen Gegenfläche an der konischen Innenfläche (10) des Schließrings (12) arretiert.

## Claims

1. Vulcanization mold for tires of vehicles, having an upper and a lower sidewall part, a closure ring that has a conical inner surface and is intended for a tread-molding ring, with certain portions of said conical inner surface being provided with guide means which, in a sliding manner, guide sliding shoes, segments that are rigidly connected to said sliding shoes and form said tread-molding ring, characterized in that the conical surface (10) is covered with sheets (14) of sliding material at pressure receiving portions.

2. Vulcanization mold according to claim 1, characterized in that said sheet (14) of sliding material is thin, preferably having a thickness of from 1 to 5 mm, and that it is detachably secured to said conical inner surface (10).

3. Vulcanization mold according to one of the preceding claims, characterized in that the sheet (14) of sliding material consists of a copper-containing composition in which graphite is incorporated.

4. Vulcanization mold according to one of the preceding claims, characterized in that said guide means (16) has an essentially T-shaped cross-sectional shape on the conical inner surface (10) and is detachably mounted on said conical inner surface (10), and that the sliding shoes (42) are integrally formed on said segments.

5. Vulcanization mold according to claim 4, characterized in that the essentially T-shaped guide means (16), on their surfaces facing the conical inner surface (10), are covered with sheets (30) of sliding material.

6. Vulcanization mold according to claim 5, characterized in that the T-shaped guide means (16) comprise a crosspiece (18) and a spacer (20) that can be detached from the latter, and that the sheet (30) of sliding material which is disposed on the surface of the crosspiece facing the conical inner surface (10) extends as a single piece over the entire surface of the crosspiece (18).

7. Vulcanization mold according to claim 6, characterized in that the sheet (30) of sliding material extending over the crosspiece (18) is held in place by a screw connection (screws 32) provided between the spacer (20) and the crosspiece (18).

8. Vulcanization mold according to one of the preceding claims, characterized in that both portions of the conical inner surface (10) of the closure ring (12) which are covered by the guide means (16) are free of said sheet (14) of sliding material.

9. Vulcanization mold according to one of the preceding claims, characterized in that the sheet (14) of sliding material is secured to the conical inner surface (10) via countersunk screws.

10. Vulcanization mold according to one of the preceding claims, characterized in that sheets (14, 30) of sliding material are comprised of two layers, including a support layer (36) of a strong and resiliently tough material, preferably made of sheet steel, which supports a lubricating layer (38) consisting of a softer material.

11. Vulcanization mold according to claim 10, characterized in that the lubricating layer (38) is removed at places where the countersunk screws of the screw connections are provided and that the screw connection fixes the sheet (14) of sliding material via conically bent parts of the support layer (36) between the countersunk screw head of the screw connection and a corresponding conical cooperating surface to the conical inner surface (10) of the closure ring (12).

## Revendications

1. Moule de vulcanisation pour bandages pneumatiques destiné à des bandages pneumatiques pour véhicules automobiles, comprenant : une partie supérieure de moule et une partie inférieure de moule à parois latérales; une bague de fermeture destinée à un anneau de moule pour bande de roulement munie d'une surface interne conique, des dispositifs de guidage étant prévus contre la surface interne conique, qui guident des patins en leur imprimant un mouvement de glissement; des segments qui sont reliés à demeure aux patins et qui forment l'anneau de moule pour bande de roulement, **caractérisé en ce que** la surface interne conique (10) est recouverte, aux endroits qui absorbent la pression, d'une tôle (14) faisant office d'agent de démoulage.

2. Moule de vulcanisation pour bandages pneumatiques selon la revendication 1, **caractérisé en ce que** la tôle (14) faisant office d'agent de démoulage est de réalisation mince, ayant en particulier une épaisseur de 1 à 5 mm, et **en ce qu'**elle est fixée de manière amovible à la surface interne conique (10).

3. Moule de vulcanisation pour bandages pneumatiques selon l'une quelconque des revendications précédentes, **caractérisé en ce que** la tôle (14) faisant office d'agent de démoulage est constituée d'un alliage contenant du cuivre, dans lequel on prévoit des inclusions de graphite.

4. Moule de vulcanisation pour bandages pneumatiques selon l'une quelconque des revendications précédentes, **caractérisé en ce que** les dispositifs de guidage (16) installés contre la surface interne conique (10) présentent en coupe transversale un profil essentiellement en forme de T et sont montés de manière amovible contre les surfaces internes coniques (10) et **en ce qu'**on façonne les patins (42) de manière solidaire aux segments.

5. Moule de vulcanisation pour bandages pneumatiques selon la revendication 4, **caractérisé en ce que** les dispositifs de guidage (16) essentiellement en forme de T sont recouverts d'une tôle (30) faisant office d'agent de démoulage sur leurs surfaces dirigées vers la surface interne conique (10).

6. Moule de vulcanisation pour bandages pneumatiques selon la revendication 5, **caractérisé en ce que** les dispositifs de guidage (16) en forme de T présentent une branche transversale (18) et un écarteur (20) qui peut se séparer de la branche transversale (18) et **en ce que** la tôle (30) faisant office d'agent de démoulage, appliquée sur la surface de la branche transversale dirigée vers la surface interne conique (10), s'étend solidairement par-dessus la branche transversale (18).

7. Moule de vulcanisation pour bandages pneumatiques selon la revendication 6, **caractérisé en ce que** la tôle (30) faisant office d'agent de démoulage et s'étendant par-dessus la branche transversale (18) est maintenue en position fixe à l'intervention d'un raccord à vis (vis 32) prévu entre l'écarteur (20) et la branche transversale (18).

8. Moule de vulcanisation pour bandages pneumatiques selon l'une quelconque des revendications précédentes, **caractérisé en ce que** les parties de la surface interne conique (10) de la bague de fermeture (12) qui sont recouvertes par les dispositifs de guidage (16) sont exemptes de tôle (14) faisant office d'agent de démoulage.

9. Moule de vulcanisation pour bandages pneumatiques selon l'une quelconque des revendications précédentes, **caractérisé en ce que** la tôle (14) faisant office d'agent de démoulage est vissée à la surface interne conique (10), les vis étant réalisées avec une tête conique ou noyée.

10. Moule de vulcanisation pour bandages pneumatiques selon l'une quelconque des revendications précédentes, **caractérisé en ce que** la tôle (14, 30) faisant office d'agent de démoulage est réalisée en deux couches, une couche de support (36) étant prévue en une matière stable et viscoplastique, en particulier en tôle d'acier, qui porte une couche de lubrification (38) constituée d'une matière plus tendre.

11. Moule de vulcanisation pour bandages pneumatiques selon la revendication 10, **caractérisé en ce qu'**aux endroits fraisés des raccords à vis de la tôle (14) faisant office d'agent de démoulage, on a retiré la couche de lubrification (38) et **en ce que** le raccord à vis bloque la tôle (14) faisant office d'agent de démoulage et disposée par-dessus les parties de la couche de support (36) ayant subi une déformation conique, contre la surface interne conique (10) de la bague de fermeture (12), entre la tête noyée du raccord à vis et une contre-surface conique.

Fig. 1

Fig. 4

Fig. 2

Fig. 3

Fig. 5

Fig. 6

Fig. 7